Europäisches Patentamt

European Patent Office

Office européen des brevets

(11) Numéro de publication: **0 306 367 B1**

## (12) FASCICULE DE BREVET EUROPEEN

(45) Date de publication de fascicule du brevet: **04.11.92**   (51) Int. Cl.5: **B22F 3/14**, C04B 35/64

(21) Numéro de dépôt: **88402001.7**

(22) Date de dépôt: **01.08.88**

(54) **Procédé de mise en forme d'un matériau par pressage isostatique à chaud et gaine en titane utilisable dans ce procédé.**

(30) Priorité: **05.08.87 FR 8711122**

(43) Date de publication de la demande:
**08.03.89 Bulletin 89/10**

(45) Mention de la délivrance du brevet:
**04.11.92 Bulletin 92/45**

(84) Etats contractants désignés:
**DE GB IT SE**

(56) Documents cités:
**DE-A- 3 422 174**
**GB-A- 1 415 482**
**US-A- 3 340 053**
**US-A- 3 466 734**
**US-A- 3 627 521**

(73) Titulaire: **COMMISSARIAT A L'ENERGIE ATO-MIQUE Etablissement de Caractère Scientifique Technique et Industriel**
**31/33, rue de la Fédération**
**F-75015 Paris(FR)**

(72) Inventeur: **Boncoeur, Marcel**
**22, rue Marsoulan**
**F-75012 Paris(FR)**
Inventeur: **Lieven, Thierry**
**26, rue d'Estienne d'Orves**
**F-92120 Montrouge(FR)**
Inventeur: **Palacio, Marc**
**36, Avenue La Place**
**F-94110 Arcueil(FR)**

(74) Mandataire: **Mongrédien, André et al**
**c/o BREVATOME 25, rue de Ponthieu**
**F-75008 Paris(FR)**

## Description

La présente invention a pour objet un procédé de mise en forme d'un matériau par pressage isostatique à chaud.

De façon plus précise, elle concerne des procédés de mise en forme de matériaux, dans lesquels on introduit une poudre du matériau éventuellement sous la forme de précomprimé dans une gaine ductile, on scelle la gaine et on soumet la gaine scellée à un pressage isostatique à chaud.

Des procédés de ce type sont décrits par exemple dans les brevets français FR-A-2 353 355, européen EP-A 0 036 202 et américain US-A-4 007 251. Généralement, les gaines sont réalisées en acier inoxydable, en acier doux, en titane, en zirconium ou en alliage de titane ou de zirconium, et elles doivent être éliminées en fin d'opération, soit mécaniquement, par exemple par découpage, soit chimiquement, par exemple par dissolution dans un solvant approprié.

L'emploi de telles gaines nécessite ainsi des opérations supplémentaires de dégainage et d'usinage des pièces obtenues. Par ailleurs, lors du refroidissement de la pièce mise En forme par pressage isostatique à chaud, certaines contraintes thermomécaniques peuvent être engendrées par la gaine dans le matériau mis en forme et conduire à des ruptures et/ou des fissures.

La présente invention a précisément pour objet un procédé de mise en forme d'un matériau céramique par pressage isostatique à chaud dans lequel on utilise une gaine particulière permettant de pallier les inconvénients précités.

Le procédé, selon l'invention, de mise en forme d'un matériau par pressage isostatique à une température d'au moins 1300°C d'une poudre dudit matériau disposée dans une gaine étanche réalisée en titane ou en alliage de titane se caractérise en ce que la gaine est revêtue intérieurement de tantale de façon telle qu'elle puisse se fragiliser, lors du pressage isostatique à chaud, par diffusion du tantale dans le titane ou l'alliage de titane, en présence d'oxygène.

Le choix d'une telle gaine permet ainsi d'éviter les opérations de dégainage nécessaires selon l'art antérieur car après refroidissement à la température ambiante, la gaine est détériorée et peut être facilement décollée de la pièce mise en forme. Par ailleurs, le fait d'avoir une gaine fragilisée permet d'éviter, lors du refroidissement, que des contraintes thermomécaniques soient engendrées par la gaine dans la pièce mise en forme, et provoquent ainsi des ruptures et des fissures dans le matériau mis en forme. De plus, en utilisant une telle gaine, il n'est plus nécessaire de prévoir des revêtements internes pour faciliter l'élimination de la gaine en fin d'opération et l'usinage de la pièce aux cotes définitives est très simplifié. Une seule opération de rectification suffit, ce qui est très avantageux lorsqu'il s'agit de pièces en matériau très dur.

Dans l'invention, la détérioration de la gaine est due à la diffusion du tantale dans la gaine en titane avec fragilisation simultanée par de l'oxygène. Dans un tel procédé, l'oxygène peut être apporté dans la gaine soit avant le pressage isostatique par exemple lors du dépôt du tantale dans la gaine en titane, ou par un traitement ultérieur d'une gaine en titane revêtu de tantale en atmosphère neutre, soit pendant le pressage isostatique par le matériau à mettre en forme.

Généralement, lorsqu'on utilise le procédé de l'invention avec des matériaux ne comportant pas d'oxygène, on apporte l'oxygène dans la gaine en titane revêtue de tantale en réalisant le revêtement de tantale par projection en présence d'oxygène. Ceci peut être effectué notamment par projection au chalumeau à plasma en présence d'air. On peut toutefois apporter l'oxygène sur une gaine revêtue de tantale en atmosphère neutre en effectuant ensuite un traitement d'oxydation de la gaine revêtue, par exemple par chauffage en atmosphère oxydante.

En revanche, lorsque le matériau céramique à mettre en forme est un matériau contenant de l'oxygène, par exemple un oxyde tel que l'alumine, il n'est pas nécessaire d'apporter d'oxygène dans la gaine en titane et l'on peut, dans ce cas, revêtir la gaine par projection en atmosphère neutre.

Dans le procédé de l'invention, la température utilisée lors de la compression isostatique joue également un rôle très important pour qu'il y ait une diffusion suffisante du tantale dans le titane. Ainsi, à des températures inférieures à 1300°C, il est difficile d'obtenir la fragilisation de la gaine. Aussi, il est nécessaire d'opérer à des températures supérieures à 1300°C, et mieux encore à des températures supérieures à 1350°C.

Dans les conditions données ci-dessus, le tantale réagit avec le titane à la température du pressage isostatique à chaud pour fragiliser la gaine sans toutefois altérer le matériau mis en forme. Le tantale ne réagit que très lentement et que très superficiellement car il faut que la gaine reste intacte jusqu'à la fin de la densification du matériau pour continuer de jouer son rôle de protection. Par ailleurs, le composé formé par réaction du tantale avec le titane en présence d'oxygène ne contamine pas le matériau et ne colle pas sur celui-ci. De plus le composé formé n'est ni nuisible ni toxique. Il fragilise seulement la gaine en fin de pressage isostatique pour qu'elle se rompe pendant le refroidissement de la pièce à la température ambiante.

Généralement, la gaine en titane ou alliage de titane a une épaisseur de 0,8 à 3 mm et la couche interne de tantale a une épaisseur de 0,08 à 0,150 mm. De telles épaisseurs permettent de transmettre la pression isostatique, tout en conservant une résistance suffisante pendant le pressage, et elles ne sont pas trop importantes afin d'obtenir une dégradation suffisante de la gaine pour qu'elle se rompe lors du refroidissement.

Le procédé de l'invention peut être utilisé pour mettre en forme différents matériaux, en particulier des matériaux à base de bore, de carbone, des carbures, par exemple le carbure de silicium, des borures, par exemple des borures de titane, de zirconium et de Terres rares, des oxydes tels que l'alumine, des siliciures et des matériaux céramiques ou composites de haute technologie difficiles à élaborer comme les composites céramique-métal et les composites céramique-céramique.

Toutefois, il est nécessaire que les matériaux utilisés dans le procédé de l'invention puissent être mis en forme à des températures inférieures à la température de fusion du titane (1650°C) ou de l'alliage de titane constituant la gaine. Néanmoins, avec des matériaux nécessitant des températures supérieures, on peut utiliser le procédé de l'invention pour réaliser un premier cycle de mise en forme à des températures inférieures à la température de fusion de la gaine, puis poursuivre le frittage du matériau, en l'absence de gaine, à des températures supérieures si le produit obtenu lors du premier cycle de traitement présente des caractéristiques satisfaisantes.

D'autres caractéristiques et avantages de l'invention apparaîtront mieux à la lecture des exemples suivants donnés bien entendu à titre illustratif et non limitatif.

EXEMPLE 1
- - - - - - -

On part d'une poudre de bore ayant une granulométrie inférieure à 38 $\mu$m et on l'introduit dans une gaine en titane ayant une épaisseur de 0,8 mm et la forme d'un cylindre droit d'une hauteur de 50 mm et d'un diamètre de 250 mm qui a été revêtue intérieurement, par projection au chalumeau à plasma en présence d'air, d'une couche de tantale de 0,1 mm d'épaisseur.

On tasse la poudre de bore à l'intérieur de la gaine jusqu'à ce que l'on obtienne une densité représentant plus de 50% de la densité théorique, puis on met la gaine sous vide primaire et on la soude. On introduit alors la gaine scellée dans un dispositif de compression isostatique à chaud, on monte la pression à 230 MPa et la température à 1550°C, et l'on maintient cette pression et cette température pendant 30 min.

Pendant ce traitement, la gaine en titane est fragilisée par diffusion du tantale dans le titane en présence de l'oxygène qui a été adsorbé par la poudre de tantale lors de la projection au chalumeau à plasma. Aussi, la gaine se rompt lors du refroidissement à la température ambiante.

Le dégainage peut donc être réalisé facilement puisqu'il suffit de retirer les morceaux de gaine détériorée qui se décollent de la pièce obtenue.

Cette dernière présente la densité théorique ; elle est exempte de fissuration et il n'y a pas eu de croissance significative de la taille des grains. On ne voit pas non plus de phases parasites.

Par ailleurs, les taux d'impuretés de la poudre de bore de départ n'ont pas évolué pendant l'opération de pressage à chaud, comme l'indiquent les résultats d'analyse donnés dans le tableau ci-dessous.

TABLEAU

| ELEMENTS | POUDRE DE DEPART | MATERIAU FINAL |
|----------|------------------|----------------|
| C | 0,4 à 0,55% | 0,4 à 0,6% |
| O2 | 0,2 à 0,5% | 0,3 à 0,6% |
| Si | 900 à 1200 ppm | 1200 ppm |
| Mn | 580 à 660 ppm | 650 |
| Mg | 90 à 130 | 100 |
| Fe | 1000 à 1400 ppm | 1300 |
| Tl | 90 à 170 ppm | 110 |
| Al | 470 à 800 | 660 |
| Ca | 210 à 300 | 290 |
| Cu | 90 à 130 | 120 |
| Zr | 220 à 350 | 240 |

Dans cet exemple, on peut partir d'une préforme obtenue par pressage isostatique à froid de la poudre de bore, puis introduire cette préforme dans la gaine en titane revêtue de tantale. On obtient dans ces conditions des résultats identiques à ceux décrits ci-dessus.

EXEMPLE 2

On part de la même poudre de bore que dans l'exemple 1 et on l'introduit dans une gaine en titane revêtue de tantale comme dans l'exemple 1. On opère ensuite comme dans l'exemple 1, mais en réalisant la compression isostatique à une température de 1390°C.

Dans ces conditions, la gaine est détériorée et lors du refroidissement elle est détruite. La pièce obtenue présente une densité correspondant à 95% de la densité théorique.

EXEMPLE 3

On procède comme dans les exemples 1 et 2 en partant de la même poudre de bore, mais on réalise la compression isostatique à chaud à une température de 1200°C. Dans ces conditions, la gaine en titane est légèrement fragilisée, mais lors du refroidissement elle n'est pas détruite et il est difficile de l'éliminer comme précédemment.

Ainsi, on constate que la température utilisée pour le pressage isostatique à chaud n'est pas suffisante pour fragiliser la gaine en titane revêtue de tantale.

EXEMPLE 4

Dans cet exemple, on part de la même poudre de bore que dans l'exemple 1, mais on la comprime à froid par pressage isostatique pour former une préforme que l'on drape à l'aide de feuilles de tantale avant de l'introduire dans une gaine en titane ayant la même épaisseur et les mêmes dimensions que celles de l'exemple 1.

Après scellement de la gaine, on réalise la compression isostatique à chaud dans les mêmes conditions que celles de l'exemple 1.

En fin d'opération, la gaine n'est pas détruite. Elle n'a donc pas été fragilisée comme dans l'exemple 1, on suppose que ceci provient du fait que l'on utilise des feuilles de tantale. En effet, avec le tantale massif, la quantité d'oxygène adsorbé est plus faible. Par ailleurs, la diffusion du tantale dans le titane est rendue plus difficile que dans l'exemple 1 où le tantale est sous forme de poudre.

On obtient toutefois une pièce en bore ayant la densité théorique et des caractéristiques cristallographiques identiques à celles obtenues dans l'exemple 1.

**Revendications**

1. Procédé de mise en forme d'un matériau par pressage isostatique à une température d'au moins 1300°C d'une poudre dudit matériau disposé dans une gaine étanche réalisée en titane ou en alliage de titane caractérisé en ce que la gaine est revêtue intérieurement de tantale de façon telle qu'elle puisse se fragiliser, lors du pressage isostatique à chaud, par diffusion du tantale dans le titane ou l'alliage de titane, en présence d'oxygène.

**2.** Procédé selon la revendication 1, caractérisé en ce que la gaine est revêtue de tantale par projection à chaud en présence d'oxygène.

**3.** Procédé selon l'une quelconque des revendications 1 et 2, caractérisé en ce que le matériau est choisi parmi le bore, le carbone, les carbures et les siliciures.

**4.** Procédé selon la revendication 2, caractérisé en ce que le matériau est choisi parmi le carbure de silicium et les borures de titane, de zirconium et de terres rares.

**5.** Procédé selon la revendication 1, caractérisé en ce que le matériau est un oxyde.

**6.** Procédé selon la revendication 1, caractérisé en ce que le matériau est l'alumine et en ce que la gaine en titane est revêtue de tantale par projection en atmosphère neutre.

**7.** Procédé selon l'une quelconque des revendications 1 à 6, caractérisé en ce que l'épaisseur de la gaine en titane est de 0,8 à 3 mm.

**8.** Gaine en titane revêtue intérieurement de tantale par projection en présence d'oxygène utilisable dans le procédé selon l'une quelconque des revendications 1 à 7.

## Claims

**1.** Process for shaping a material by isostatic pressing at a temperature of at least 1300°C of a powder of said material located in a tight sheath made from titanium or a titanium alloy, characterized in that the sheath is internally coated with tantalum so that it can be embrittled during hot isostatic compression, through the diffusion of the tantalum into the titanium or titanium alloy, in the presence of oxygen.

**2.** Process according to claim 1, characterized in that the sheath is coated with tantalum by hot spraying or projection in the presence of oxygen.

**3.** Process according to either of the claims 1 and 2, characterized in that the material is chosen from boron, carbon, carbides and silicides.

**4.** Process according to claim 2, characterized in that the material is chosen from among silicon carbide and borides of titanium, zirconium and rare earths.

**5.** Process according to claim 1, characterized in that the material is an oxide.

**6.** Process according to claim 1, characterized in that the material is alumina and that the titanium sheath is coated with tantalum by spraying in a neutral atmosphere.

**7.** Process according to any one of the claims 1 to 6, characterized in that the titanium sheath thickness is 0.8 to 3 mm.

**8.** Titanium sheath internally coated with tantalum by spraying in the presence of oxygen usable in the process according to any one of the claims 1 to 7.

## Patentansprüche

**1.** Verfahren zum Formen eines Materials durch isostatisches Pressen bei einer Temperatur von wenigstens 1300°C eines Pulvers dieses Materials, das in einer dichten, aus Titan oder einer Titanlegierung hergestellten Hülle angeordnet ist, dadurch gekennzeichnet, daß die Hülle innen so mit Tantal verkleidet ist, daß sie beim isostatischen Heißpressen durch Diffusion von Tantal in das Titan oder durch Legieren des Titans in Anwesenheit von Sauerstoff brüchig gemacht werden kann.

**2.** Verfahren nach Anspruch 1, dadurch gekennzeichnet, daß die Hülle durch Heißspritzen in Anwesenheit von Sauerstoff mit Tantal verkleidet wird.

3. Verfahren nach einem der Ansprüche 1 und 2, dadurch gekennzeichnet, daß das Material ausgewählt wird aus dem Bor, dem Kohlenstoff, den Karbiden und den Siliziden.

4. Verfahren nach Anspruch 2, dadurch gekennzeichnet, daß das Material ausgewählt wird aus dem Siliziumkarbid und den Titan-, Zirkon- und seltenen Erdboriden.

5. Verfahren nach Anspruch 1 dadurch gekennzeichnet, daß das Material ein Oxyd ist.

6. Verfahren nach Anspruch 1, dadurch gekennzeichnet, daß das Material ein Aluminiumoxyd ist und daß die Hülle aus Titan durch Spritzen unter neutraler Atmosphäre verkleidet wird.

7. Verfahren nach einem der Ansprüche 1 bis 6, dadurch gekennzeichnet, daß die Dicke der Hülle aus Titan zwischen 0,8 und 3 mm liegt.

8. Hülle aus Titan, die innen durch Spritzen unter Anwesenheit von Sauerstoff mit Tantal verkleidet ist und die in einem Verfahren nach einem der Ansprüche 1 bis 7 verwendbar ist.